# EUROPEAN PATENT APPLICATION

(11) **EP 4 733 953 A1**
(43) Date of publication of application: **29.04.2026**
(21) Application number: 25210343.7
(22) Date of filing: 22.10.2025
(51) Int. Cl.: G06F 16/245

(54) **DISTRIBUTED BLOOM FILTERS FOR MULTIPLE GRAPHICS PROCESSING UNIT (`MULTI-GPU`) ACCELERATION OF STRUCTURED QUERY LANGUAGE (´SQL´) QUERIES**

(30) Priority: 25.10.2024 US 202418927293
(71) Applicant: Microsoft Technology Licensing, LLC, Redmond, WA 98052-6399 (US)
(72) Inventor: Sen, Rathijit, Redmond, WA, 98052 (US); Cui, Wei, Redmond, WA, 98052 (US); Interlandi, Matteo, Redmond, WA, 98052 (US); Wu, Bowen, Redmond, WA, 98052 (US)
(74) Representative: Grünecker Patent- und Rechtsanwälte PartG mbB

(57) **Abstract**

Methods, apparatuses, and products for accelerating queries using a multiple graphics processing units ('GPUs') in a GPU cluster, including: generating, by each GPU in the GPU cluster, a local representation of a portion of a dataset that is stored in memory of the GPU, wherein the entire dataset is distributed across the GPU cluster; broadcasting, by each GPU in the GPU cluster, its local representation to one or more other GPUs in the GPU cluster; and generating, by each GPU in the cluster and based on local representations received from the other GPUs in the GPU cluster, a global representation of the dataset; and transferring data elements stored in memory of a first GPU to one or more other GPUs in the GPU cluster, wherein the data elements are selected using the global representation of the dataset.

## Description

### BACKGROUND

Graphics Processing Units ('GPUs') are capable of delivering better performance than Central Processing Units ('CPUs') for parallel processing tasks like graphics rendering, deep learning, and scientific simulations. GPUs excel at parallel processing tasks due to various aspects of their design, including instruction sets supported by GPUs, the number of cores in a GPU, and so on. GPU acceleration leverages these performance differences by offloading computationally intensive tasks, such as tasks that involve parallel processing, from CPUs to GPUs. Multi-GPU acceleration extends this concept through the usage of multiple GPUs, such that a computationally intensive task can be executed in parallel using multiple GPUs.

One example of multi-GPU acceleration is multi-GPU query acceleration, which is a technique used to speed up complex database queries by distributing the workload across multiple GPUs. In multi-GPU query acceleration, multiple GPUs are leveraged to process parts of a query in parallel by breaking down a query into GPU-friendly operations, distributing data across multiple GPUs, and combining the results from computations performed on one GPU with results from computations performed on other GPUs. Combining the results from local computations performed by individual GPUs often involves exchanging data between GPUs, using operations such as shuffle or broadcast. Such data exchanges can add significant overhead and degrade the query's performance, especially in situations where data is exchanged over heterogeneous interconnects with different bandwidth capabilities.

### SUMMARY

According to embodiments of the present disclosure, various methods, apparatus, and products for accelerating queries using a multiple graphics processing units ('GPUs') in a GPU cluster are described herein. In some aspects, accelerating queries using a multiple GPUs in a GPU cluster includes: generating, by each GPU in the GPU cluster, a local representation of a portion of a dataset that is stored in memory of the GPU, wherein the entire dataset is distributed across the GPU cluster; broadcasting, by each GPU in the GPU cluster, its local representation to one or more other GPUs in the GPU cluster; generating, by each GPU in the cluster and based on local representations received from the other GPUs in the GPU cluster, a global representation of the dataset; and transferring data elements stored in memory of a particular GPU, wherein the data elements are selected using the global representation of the dataset. In some aspects, an apparatus may include a memory and one or more processing devices, operatively coupled to the memory, the one or more processing devices configured to perform similar steps. In some aspects, a computer program product comprising a computer readable storage medium may store computer program instructions that, when executed, perform similar steps.

### BRIEF DESCRIPTION OF DRAWINGS

Fig. 1 sets forth a block diagram illustrating a multi-GPU architecture that may be used for accelerating queries in accordance with some embodiments.
Fig. 2 sets forth a block diagram illustrating a multi-GPU architecture that may be used for accelerating queries in accordance with some embodiments.
Fig. 3 sets forth a flow chart illustrating an example method of accelerating queries using multiple GPUs in accordance with some embodiments.
Fig. 4 sets forth a flow chart illustrating an additional example method of accelerating queries using multiple GPUs in accordance with some embodiments.
Fig. 5 sets forth a flow chart illustrating an additional example method of accelerating queries using multiple GPUs in accordance with some embodiments.
Fig. 6 sets forth a flow chart illustrating an additional example method of accelerating queries using multiple GPUs in accordance with some embodiments.
Fig. 7 sets forth a flow chart illustrating an additional example method of accelerating queries using multiple GPUs in accordance with some embodiments.
Fig. 8 sets forth a flow chart illustrating an additional example method of accelerating queries using multiple GPUs in accordance with some embodiments.
Fig. 9 illustrates an exemplary computing device that may be specifically configured to perform one or more of the processes described in the present disclosure.
Fig. 10 illustrates an exemplary GPU that may be specifically configured to perform one or more of the processes described in the present disclosure.

### DESCRIPTION OF EMBODIMENTS

The process of accelerating database queries can involve multiples GPUs processing data, and multiple GPUs exchanging data with each other so that each GPU can access the data that it needs to perform some computation. As described above, when multiple GPUs are used to accelerate database queries, performance may degrade due to data exchanges over heterogeneous interconnects between the GPUs. For example, if data needs to be broadcast from a first GPU to both a second GPU and a third GPU, and the first-to-second GPU interconnect has significantly more bandwidth than the first-to-third GPU interconnect, the data transfer to the third GPU will take longer than the data transfer for the second GPU. As a consequence of this disparity in transfer times, the first GPU and the second GPU may sit idle or otherwise be underutilized while the data transfer to the third GPU completes. Because the first GPU and the second GPU are idle or otherwise underutilized, overall query performance may suffer due to decreased parallelism. The likelihood that heterogeneous interconnects exist in a cluster of GPUs increases as the cluster gets larger.

One way to minimize the performance impact that heterogeneous interconnects have on query acceleration is to minimize the amount of data that is transferred, especially for data transfers that occur over slower interconnects. One way to minimize the amount of data that is transferred over slower interconnects is to avoid performing unnecessary data transfers over the slower interconnects. For example, if a first GPU and a second GPU are connected by a relatively slow (i.e., low bandwidth) interconnect, the first GPU should avoid transferring data to the second GPU that the second GPU does not need to receive. In order for the first GPU to avoid transferring such unnecessary data, the first GPU may need to understand what data the second GPU already has, the first GPU may need to understand what data the second GPU doesn't have, and so on.

Consider an example in which the first GPU stores a first table within its memory, and the first GPU needs to send entries in the first table to a second GPU as part of a join operation. The join operation may be initiated, for example, to combine entries in a first table that is stored within memory of the first GPU with corresponding entries in a second table that is stored within memory of the second GPU. To perform the join operation, the first GPU only needs to send entries in the first table that correspond to entries in the second table. The first GPU does not, however, need to send entries in the first table that have no corresponding entry in the second table. Stated differently, if the first GPU sent entries in the first table that do not map to corresponding entries in the second table, the first GPU would unnecessarily cause bandwidth to be consumed by transferring data that the second GPU will ultimately discard.

In order for one GPU to gain an understanding of what data is stored within the memory of another GPU, the GPUs may exchange metadata describing data that is stored in their local memories. For example, a first GPU may send metadata that describes data stored within its memory to a second GPU, and vice versa. Such a metadata may be embodied, for example, as one or more Bloom filters. A Bloom filter is a probabilistic data structure used to test whether an element is a member of a set. In one embodiment, a Bloom filter may be created where each entry in the Bloom filter corresponds to some value (e.g., a join key or other join attribute) for an entry in a table. In other embodiments, each entry in the Bloom filter may correspond to some other value in the table. In order to determine if the table contains a particular entry, the Bloom filter may be queried or probed for some value (e.g., a join key or other join attribute).

In some embodiments, each GPU can generate a Bloom filter that reflects what data is stored within its memory, and each GPU can subsequently send its generated Bloom filter to the other GPUs. In such an example, because each GPU has a Bloom filter that describes what data is stored locally by another GPU, the GPUs may avoid unnecessary data transfers. By avoiding unnecessary data transfers, limited bandwidth between the GPUs can be more efficiently utilized, bottlenecks can be minimized, and overall query execution performance can be improved such that queries execute faster.

Readers will appreciate that because bandwidth between the GPUs can be more efficiently utilized, it may be possible for users to deploy more workloads on those GPUs, thereby reducing a customer's cost as customers may need fewer GPUs to execute the same amount of workloads. Furthermore, because queries execute faster, a customer may execute more queries in the same amount of time or a customer may experience more rapid responses to their queries, thereby enhancing a customer's experience. By enhancing a customer's experience, it can be more attractive for a customer to deploy their databases on a cloud platform that is enabled with query acceleration as described in the present disclosure.

In fact, for customers who build solutions (e.g., software applications) that leverage databases and query acceleration, the customer's solution may even perform better as a result of more rapid responses to their queries. Consider an example where a software development company develops a cloud-native software application. If the cloud-native software application queries a database, the performance of the cloud-native software application itself can be improved through the usage of query acceleration as described in the present disclosure. The software development company may be able to attract their own customers more easily by deploying their solutions on a cloud platform that is enabled with query acceleration as described in the present disclosure. Because the cloud platforms described in the present disclosure are able to provide for query acceleration as described in the present disclosure, it can be easier to convince potential cloud platform customers (i.e., the software development company) to deploy their solutions on such a cloud platform. Other improvements can also be experienced based on the manner in which a customer interacts with the embodiments described in the present disclosure.

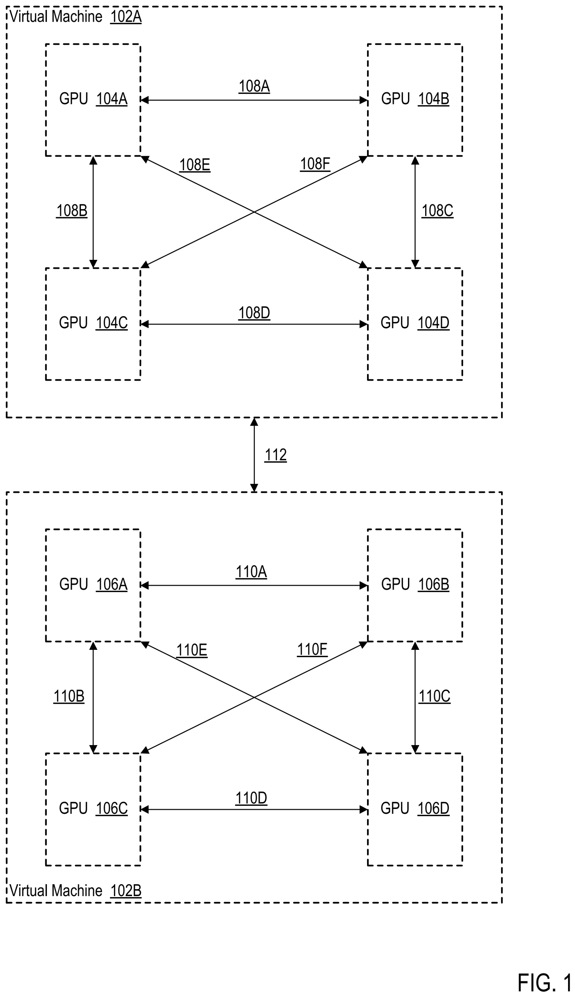

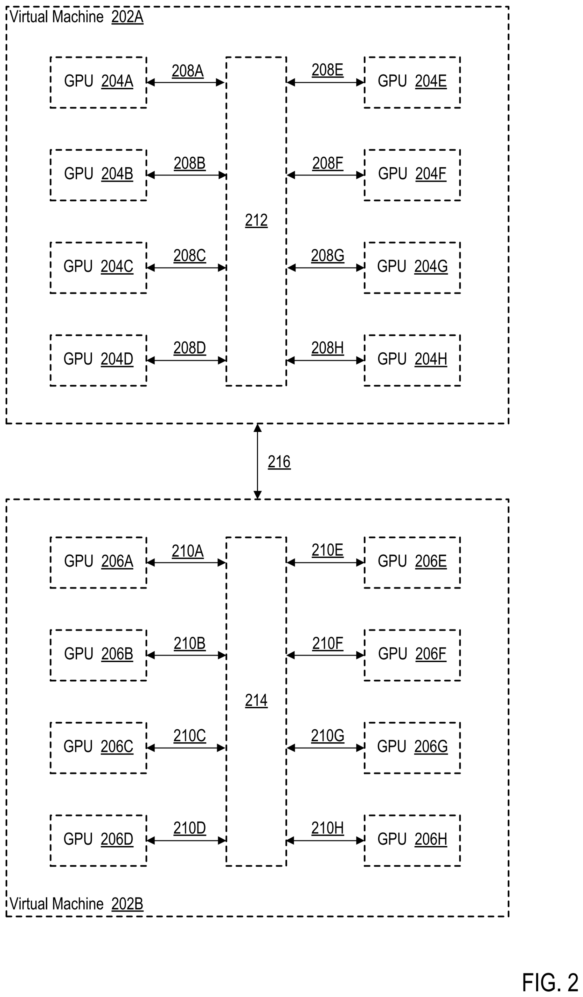

As an explanatory aid, Fig. 1 and Fig. 2 illustrate examples of multi-GPU architectures that may be used for accelerating queries. Each of these architectures have heterogeneous interconnects that can potentially degrade query acceleration. Each architecture is described in more detail below, although other architectures exist where the presence of heterogeneous interconnects can potentially degrade query acceleration.

Fig. 1 sets forth a block diagram illustrating a multi-GPU architecture for accelerating queries in accordance with some embodiments. The example depicted in Fig. 1 includes multiple virtual machines 102A-B, each containing multiple GPUs. The virtual machines 102A-B can be GPU-enabled cloud computing instances offered by a cloud services provider. The virtual machines 102A-B may be embodied, for example, as Microsoft Azure NC-series virtual machines, Google Cloud Platform ('GCP') A2 virtual machines, GCP A3 virtual machines, Amazon Web Services ('AWS') Elastic Cloud Compute ('EC2') P-series instances, AWS EC2 G-series instances, or others. Although 102A and 102B are labelled as virtual machines, other forms of cloud compute instances may be leveraged in accordance with some embodiments of the present disclosure.

Each virtual machine 102A-B includes GPUs that are connected by GPU-to-GPU interconnects. For example, virtual machine 102A includes four GPUs 104A-D, which are connected via a collection of GPU-to-GPU interconnects 108A-F. Virtual machine 102B similarly includes four GPUs 106A-D, which are connected via a collection of GPU-to-GPU interconnects 110A-F. Each of the GPU-to-GPU interconnects 108A-F, 110A-F can be interconnects that are designed for GPU-to-GPU communications. For example, the GPU-to-GPU interconnects 108A-F, 110A-F may be embodied as wire-based serial multi-lane near-range communications links such as Nvidia NVLink interconnects. Such interconnects may deliver relatively high bandwidth.

The virtual machines 102A-B may be coupled for data communications with each other via one or more VM-to-VM interconnects 112. This VM-to-VM interconnect 112 can be a more traditional interconnect for exchanging data packets such as Ethernet, InfiniBand, or some other interconnect. In these examples, the VM-to-VM interconnect 112 may deliver substantially less bandwidth than the GPU-to-GPU interconnects 108A-F, 110A-F as a result of the heterogeneity between the interconnect types.

Fig. 2 sets forth a block diagram illustrating another multi-GPU architecture for accelerating queries in accordance with some embodiments. The example depicted in Fig. 2 includes multiple virtual machines 202A, 202B that each include a plurality of GPUs. The virtual machines 202A, 202B depicted in Fig. 2 can be GPU-enabled cloud computing instances that can be provided by a cloud services provider or other provider. The virtual machines 202A-B may be embodied, for example, as Microsoft Azure ND-series virtual machines, GCP A2 virtual machines, GCP A3 virtual machines, AWS EC2 P-series instances, AWS EC2 G-series instances, and so on. Readers will appreciate that although 202A and 202B are labelled as virtual machines, in other forms of cloud compute instances may be leveraged in accordance with embodiments of the present disclosure.

Each virtual machine 202A-B includes GPUs that are connected by GPU-to-GPU interconnects. For example, virtual machine 202A includes eight GPUs 204A-H that are each connected via a collection of GPU-to-GPU interconnects 208A-H and switches 212. Virtual machine 202B similarly includes eight GPUs 206A-H that are each connected via a collection of GPU-to-GPU interconnects 210A-H and switches 214. Each of the GPU-to-GPU interconnects 208A-H, 210A-H and switches 212, 214 that are depicted in Fig. 2 can be interconnects that are designed for GPU-to-GPU communications. For example, the GPU-to-GPU interconnects 208AH, 210A-H may be embodied as wire-based serial multi-lane near-range communications links such as Nvidia NVLink interconnects. Such interconnects may deliver relatively high bandwidth.

The virtual machines 202A-B may be coupled for data communications with each other via one or more VM-to-VM interconnects 216. This VM-to-VM interconnect 216 can be a more traditional interconnect for exchanging data packets such as Ethernet, InfiniBand, or some other interconnect. In these examples, the VM-to-VM interconnect 216 may deliver substantially less bandwidth than the GPU-to-GPU interconnects 208A-H, 210A-H and switches 212, 214 as a result of the heterogeneity between the interconnect types.

Readers will appreciate that although the examples described above illustrate embodiments where similar virtual machines are paired together to accelerate queries, in other embodiments a collection of fully or partially disparate virtual machines may be collectively utilized to accelerate queries. Readers will further appreciate that although the embodiments described above and below refer to virtual machines that have GPUs, other embodiments may include other forms of cloud compute instances that include GPUs.

In some embodiments, the computing resources may be physical resources where GPUs within a single physical unit (e.g., a single server) are connected by relatively high-speed interconnects, and multiple physical units (e.g., multiple servers) are connected by slower interconnects. This creates heterogeneity between the intra-unit interconnects and the inter-unit interconnects. In other embodiments, some combination of physical and virtual resources may be arranged in a similar way where intra-unit interconnects and inter-unit interconnects offer different bandwidths.

Given that the architectures described above have heterogeneous interconnects that can potentially degrade query acceleration, the flow charts below describe methods that can be leveraged to avoid or mitigate such degradation. As such, by implementing the methods described below, query performance can be improved and resources within the virtual machines can be better utilized.

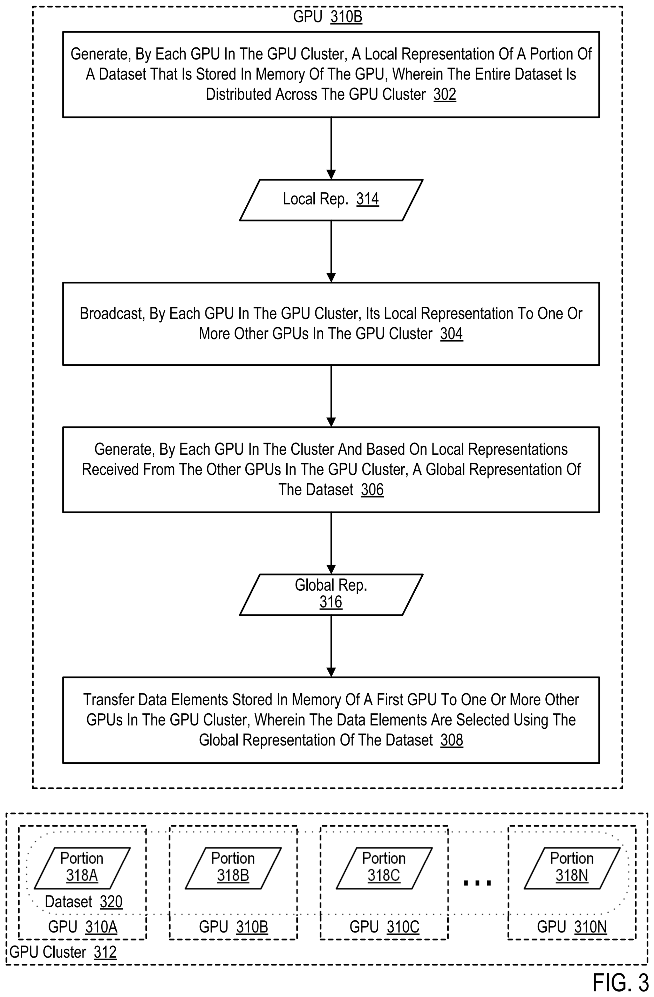

For further explanation, Fig. 3 sets forth a flow chart illustrating an example method of accelerating queries using multiple GPUs 310A, 310B, 310C, 310N (hereafter, '310A-N') in accordance with some embodiments. The GPUs 310A-N in Fig. 3 collectively form a GPU cluster 312. The GPU cluster 312 can be a physical grouping of GPUs, where the GPUs 310A-N are part of some appliance or other physical system. Alternatively, the GPU cluster 312 may be a logical grouping of GPUs, where the GPUs 310A-N may or may not be part of the same physical system. For example, the GPU cluster 312 may be embodied as one or more virtual machines that are provided by a cloud services provider, where each of the virtual machines includes one or more GPUs 310A-N. Readers will appreciate that each of the GPUs 310A-N may be connected using heterogeneous interconnects as described elsewhere in the present disclosure. Although not depicted in this particular figure, each of the GPUs 310A-N may include memory that is used to store data. Such memory may be embodied, for example, as High Bandwidth Memory ('HBM') or as some other form of memory.

In the example method depicted in Fig. 3, a dataset 320 may be distributed across the GPUs 310A-N. For example, a first portion 318A of the dataset 320 may be stored in memory of a first GPU 310A, and a second portion 318B of the dataset 320 may be stored in memory of a second GPU 310A. The dataset 320 may be distributed across the GPUs 310A-N using a round robin placement algorithm where dataset 320 elements are placed on GPUs 310A-N in a circular order, returning to the first GPU 310A after reaching the last GPU 310N. In other embodiments, initial data placement may occur in some other way such as content-based placement, hash-based placement, based on a range partitioning scheme, or in some other way. In Fig. 3, the entire dataset 320 is distributed across the GPU cluster 312 in multiple portions 318A, 318B, 318C, 318N (hereafter, '318A-N'). An aggregation of the portions 318A, 318B, 318C, 318N (hereafter, '318A-N') will yield the entire dataset 320.

The example method depicted in Fig. 3 includes generating 302, by each GPU 310A-N in the GPU cluster 312, a local representation 314 of a portion 318A-N of the dataset 320 that is stored in memory of the GPU 310A-N. In some embodiments, the local representation 314 may be a Bloom filter. In such embodiments, generating 302 a local representation 314 of the portion 318B of the dataset 320 may be carried out, for example, by choosing various parameters such as the size ('m') of the bit array that will be used for the Bloom filter, the number hash functions ('k'), and so on. In these examples, each GPU 310A-N will use identical parameters. Readers will appreciate the larger the size of the array, and the more hash functions that are selected, fewer false positives will occur. Once the parameters have been established, a bit array of size m may be initialized with all bits set to a value of 0 and k different hash functions may be selected. Examples of such hash functions can include, for example, Secure Hash Algorithm (SHA) family algorithms such as SHA-256, MurmurHash, SipHash, or others. In some embodiments, a single hash function may be used but multiple hash values may be obtained by applying techniques such as double hashing, enhanced double hashing, seeding, or others. Readers will appreciate that in some embodiments, a combination of multiple hash functions and deriving multiple values from a single hash function may be implemented.

Once the bit array has been initialized and the hash functions have been selected, generating 302 a local representation 314 of the portion 318B of the dataset 320 can continue by adding elements to the Bloom filter. To add an element to the Bloom filter, each of the k hash functions may be applied to each element x in the portion 318B of the dataset 320. An example of an element in the portion 318B of the dataset 320 may be, for example, a join key for an entry in the dataset, another identifier for an entry in the dataset, and so on. For example, if the dataset 320 is a table and the portion 318B of the dataset 320 represents some subset of all entries in the table, the join key for each entry in the subset may serve as the data elements that the hash functions are applied to. In this example, each hash function will output a position between 0 and m-1 and the bits at each of these k positions in the bit array may be set to 1. Once this process has been completed for each element the portion 318B of the dataset 320, the Bloom filter for that portion 318B of the dataset 320 is complete. In such a way, the resulting Bloom filter may serve as the local representation 314 of the portion 318B of the dataset 320.

For ease of explanation, generating 302 a local representation 314 of a portion 318B of the dataset 320 that is stored in memory of a particular GPU is depicted for GPU 310B. Readers will appreciate, however, that each of the other GPUs 310A-N also generate 302 a local representation of the portion of the dataset 320 that is stored in its memory.

The local representation 314 depicted in Fig. 3 may be embodied as a metadata representation of the portion 318B of the dataset 320 that is stored in memory of a particular GPU (depicted here as GPU 310B). The local representation 314 may be a 'metadata representation' as the local representation 314 can be information that describes the portion 318B of the dataset 320, without being an actual copy of the portion 318B of the dataset 320 itself. Likewise, the local representation 314 may include information that makes the portion 318B of the dataset 320 easier to find, use, or manage.

Generating 302 a local representation 314 of the portion 318B of the dataset 320 that is stored in memory of the GPU 310B may be carried out, for example, by using the portion 318B of the dataset 320 as an input to some computational function. The local representation 314 may therefore be the output of the computational function that is generated when using the portion 318B of the dataset 320 as input. For example, generating 302 a local representation 314 of the portion 318B of the dataset 320 may be carried out by using the portion 318B of the dataset 320 as input to one or more hash functions, in order to construct the local representation 314 (or the entire local representation 314) by setting values to 0 or 1 based on the hash values.

Fig. 3 also includes broadcasting 304, by each GPU 310A-N in the GPU cluster 312, its local representation 314 to one or more other GPUs 310A-N in the GPU cluster 312. For example, GPU 310B broadcasts 304 its local representation 314 to GPU 310A, GPU 310C, and GPU 310N. Any GPU may broadcast 304 its local representation 314 to one or more other GPUs in the GPU cluster 312, typically by initiating one or more data communications operations that distribute the local representation 314, directly or indirectly, to the other GPUs. The one or more data communications operations may be implemented using various technologies, such as Message Passing Interface ('MPI') Broadcast operations, Apache Spark broadcast variables, special purpose messages sent over a packet-based communications protocol, ring all-reduce operations, or in some other way. Regardless of the specific technology that is used, the local representation can include the local representation as payload and can identify other GPUs as the intended recipients of the local representation.

In some embodiments, the local representation 314 may be sent from a particular GPU 310B to other GPUs 310A, 310C, 310N in the GPU cluster 312 using point-to-point data communications where: 1) GPU 310B sends its local representation 314 to GPU 310A using a first set of data communications operations, 2) GPU 310B sends its local representation 314 to GPU 310C using a second set of data communications operations, and 3) GPU 310B sends its local representation 314 to GPU 310C using a third set of data communications operations. In other embodiments, the local representation 314 may be propagated among the GPUs in the GPU cluster 312 after one or more GPUs 310A, 310C, 310N have received the local representation 314 from the originating GPU 310B. For example, GPU 310B may send its local representation 314 to GPU 310A, which may subsequently send the local representation to GPU 310C. The specific implementation utilized may vary based on the cluster's size, network topology, or consideration.

Fig. 3 also includes generating 306 a global representation 316 of the dataset 320. In Fig. 3, each GPU 310A-N can generate 306 a global representation 316 of the dataset 320 based on local representations 314 that it received from the other GPUs 310A-N in the GPU cluster 312. Generating 306 a global representation 316 of the dataset 320 may be carried out by a particular GPU combining its local representation 314 with the local representations that it has received from all of the other GPUs in the GPU cluster. The particular manner in which a particular GPU combines its local representation with the local representations that it has received from all of the other GPUs can depend upon the nature of the local representations 314. A particular GPU may combine its local representation 314 with the local representations that it has received from all of the other GPUs, for example, through the use of operations such as a bitwise OR, a merge, a concatenate, or some other operation.

Consider the example described above in which each GPU 310A-N generates a Bloom filter as its local representation 314. Assume that each GPU 310A-N generates a Bloom filter of that includes a bit array of the same size 'm' and that the same 'k' hash functions that are applied to each element in each GPU's local portion 318A-N of the dataset 320. In such an example, a particular GPU 310B can generate 306 a global representation 316 of the dataset 320 by performing a bitwise OR using its local representation 314 and the local representations that it has received from all of the other GPUs 310A, 310C, 310N in the GPU cluster 312 as inputs to the bitwise OR operation. Similarly, another GPU 310A can generate 306 a global representation 316 of the dataset 320 by performing a bitwise OR using its local representation 314 and the local representations that it has received from all of the other GPUs 310B, 310C, 310N in the GPU cluster 312 as inputs to the bitwise OR operation. In such a way, each GPU 310A-N may independently generate 306 a global representation 316 of the dataset 320.

In other embodiments, the local representations 314 from each GPU 310A-N may be aggregated in some centralized location (e.g., a centralized server, a centralized service) and combined so as to generate 306 a global representation 316 of the dataset 320. Such a global representation 316 of the dataset 320 may subsequently be distributed to each of the GPUs 310AN, for example, using a broadcast operation or similar operation. In some embodiments, aggregation operations can include non-centralized aggregation algorithms such as, for example, all-to-all exchanges, ring all-reduce, tree all-reduce.

Fig. 3 also includes transferring 308 data elements stored in memory of a particular GPU 310B. The data elements may be selected for transfer 308 using the global representation 316 of the dataset 320. Transferring 308 data elements stored in memory of a particular GPU 310B may be carried out, for example, by sending one or more messages over one or more data communications links between the particular GPU 310B and other GPUs 310A, 310C, 310N in the GPU cluster 312, by performing one or more direct memory access operations between the particular GPU 310B and memory associated with the other GPUs 310A, 310C, 310N in the GPU cluster 312, or in some other way.

In some embodiments, the GPUs 310A-N are connected via one or more NVLink interconnects. In these embodiments, transferring 308 data elements stored in memory of a particular GPU 310B to one or more other GPUs 310A, 310C, 310N in the GPU cluster 312 may be carried out through the usage of dedicated interfaces within each of the GPUs 310A-N that can be used to connect the GPUs for data communications over one or more NVLink interconnects. The particular GPU 310B may use such an interface, for example, to send one or more packets to one or more of the other GPUs 310B, 310C, 310N. In other embodiments, the GPUs 310A-N may be connected via one or more AMD xGMI interconnects.

In some embodiments, the GPUs 310A-N are connected via other interconnects such as, for example, interconnects that support Peer-to-Peer ('P2P') Communication via Peripheral Component Interconnect Express ('PCIe') data communications, interconnects that support GPUDirect data communications, or some other interconnect. In each embodiment, transferring 308 data elements stored in memory of a particular GPU 310B to one or more other GPUs 310A, 310C, 310N in the GPU cluster 312 may be carried out through the usage of interfaces that allow for data communications via messaging, data communications via packet-based data communications, data communications via direct memory access, or data communications in accordance with a corresponding protocol that is associated with the particular interconnect between the GPUs 310A-N.

In the example depicted in Fig. 3, the data elements are selected for transfer 308 using the global representation 316 of the dataset 320. Selecting data elements stored in memory of the particular GPU 310B that are to be transferred 308 to one or more other GPUs 310A, 310C, 310N using the global representation 316 of the dataset 320 may be carried out, for example, by inspecting the global representation 316 of the dataset 320 to determine which particular GPU contains a particular data element. When inspecting the global representation 316 of the dataset 320 reveals that the particular GPU 310B contains a particular data element that is requested by another GPU 310A, 310C, 310N, the data element can be transferred 308 from the particular GPU 310B to another GPU 310A, 310C, 310N.

Consider an embodiment where dataset 320 represents a first table that is distributed across multiple GPUs 310A-N, such that each GPU stores a unique portion of this first table. Now, assume a join operation has been initiated to merge entries from this distributed first table with entries from a second table, using a join key in each table to determine whether an entry in the distributed table corresponds to an entry in the second table. Readers will appreciate that joins can be done on any combination of columns (e.g., between primary key of one table and foreign key of another table, or between non-key columns), where the join columns are specified as part of the query.

In this scenario, a Bloom filter (i.e., the global representation) for the distributed table may be used to efficiently identify entries in the distributed table that correspond to entries in the second table. This Bloom filter can help avoid the need to retrieve the entire portion of the distributed table that is stored on each GPU 310A-N. Instead, the Bloom filter allows for more efficient identification of entries in the distributed table that correspond to entries in the second table.

The process of using the Bloom filter involves retrieving the join key for an entry from the second table, applying one or more hash functions that were used to generate the Bloom filter to this join key, and checking the Bloom filter to see if an entry with the same join key exists in the distributed table. If the Bloom filter indicates a match, the corresponding entry from the distributed table can then be retrieved via a transfer 308 as described above.

Readers will appreciate that although the examples described above relate to embodiments where each GPU 310A-N in a GPU cluster 312 carries out steps such as generating 302 a local representation 314, broadcasting 304 its local representation 314, and generating 306 a global representation 316 of the dataset 320, readers will appreciate that just because some set of GPUs within a particular virtual machine (or physical machine) are considered to be part of the GPU cluster 312 that accelerates queries, this does not necessarily mean that every GPU in a particular virtual machine (or physical machine) is considered to be part of the GPU cluster 312 that accelerates queries. For example, referring to Fig. 2 above, the GPU cluster 312 that is used to accelerate queriers may consist only of some subset of GPUs 206A-D that are part of virtual machine 202B, as well as some or all of the GPUs 204A-H in virtual machine 202A. In other words, although each of the GPUs that are part of the GPU cluster 312 that accelerates queries may carry out the steps described above, the mere fact that two GPUs are within the same physical machine or virtual machine does not necessarily mean that both GPUs are part of the GPU cluster 312 that accelerates queries. In fact, membership in the GPU cluster 312 is determined by whether a particular GPU participates in the acceleration of a query and is not necessarily determined by the location of the particular GPU.

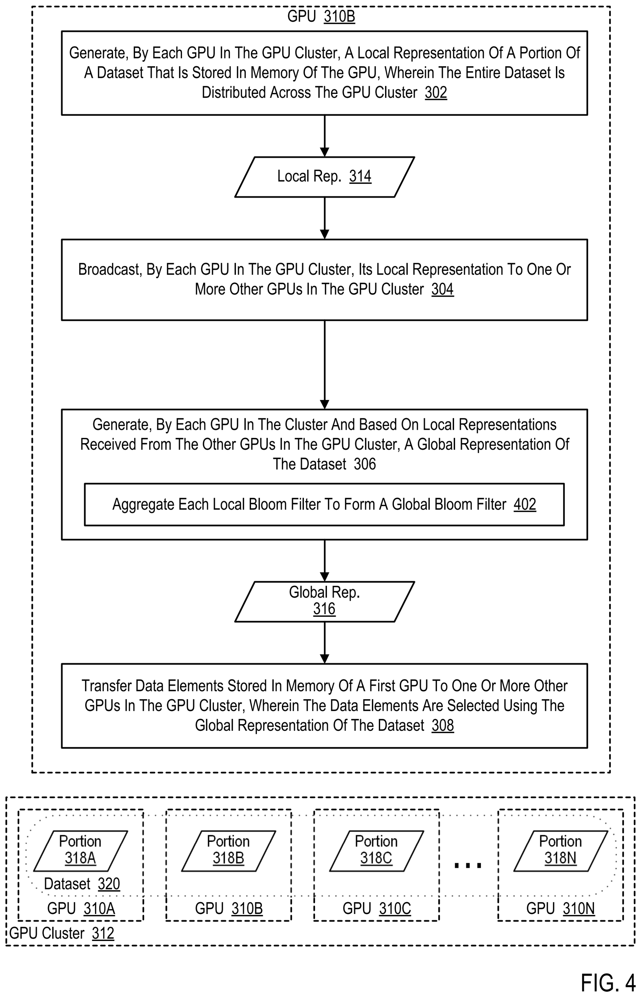

For further explanation, Fig. 4 sets forth a flow chart illustrating an additional example method of accelerating queries using multiple GPUs in accordance with some embodiments. The example method depicted in Fig. 4 is similar to the example method depicted in Fig. 3. In the example method depicted in Fig. 4, however, each local representation is a local Bloom filter that identifies each element of the dataset that is stored in memory of the GPU. As discussed above, each GPU 310A-N may generate a local Bloom filter of the same size 'm' that includes the same 'k' hash functions that are applied to each element in its local portion 318A-N of the dataset 320. Such a local Bloom filter may represent a portion of a global Bloom filter than can be used in an effort to determine whether some element is a member of the dataset 320, where portions 318AN of the dataset are distributed across a set of GPUs 310A-N that are part of a GPU cluster 312 used to accelerate queries of the dataset 320.

In Fig. 4, generating 306 a global representation 316 of the dataset 320 includes aggregating 402 each local Bloom filter to form a global Bloom filter. In such an example, a particular GPU 310B may generate a global Bloom filter by performing a bitwise OR using its local Bloom filter and the local Bloom filters that it has received from all of the other GPUs 310A, 310C, 310N in the GPU cluster 312 as inputs to the bitwise OR operation. Similarly, another GPU 310A may generate a global Bloom filter by performing a bitwise OR using its local Bloom filter and the local Bloom filters that it has received from all of the other GPUs 310B, 310C, 310N in the GPU cluster 312 as inputs to the bitwise OR operation. In such a way, each GPU 310A-N may independently aggregate 402 each local Bloom filter to form a global Bloom filter.

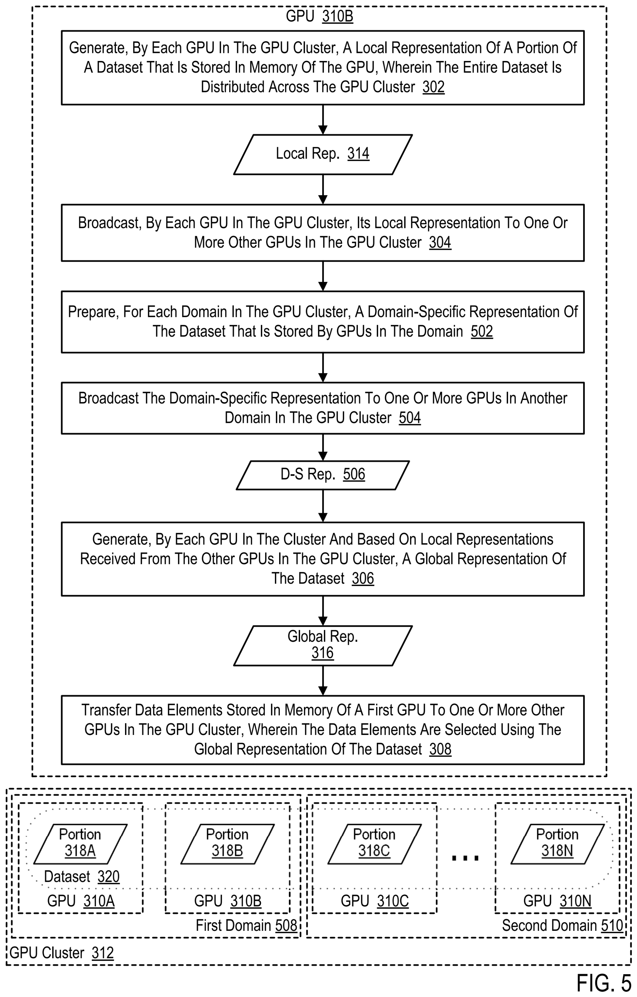

For further explanation, Fig. 5 sets forth a flow chart illustrating an additional example method of accelerating queries using multiple GPUs in accordance with some embodiments. The example in Fig. 5 includes GPUs 310A-N that are in distinct domains 508, 510. For example, two GPUs 310A-B are depicted as being in a first domain 508 and two other GPUs 310C-N are depicted as being in a second domain 510. Each domain 508, 510 may be embodied, for example, as one or more GPUs that are connected by a first type of interconnect. In this example, each domain 508, 510 may be connected by a second type of interconnect.

Referring back to the example depicted in Fig. 1, a first virtual machine 102A can be a first domain and the second virtual machine 102B can be a second domain. In such an example, the GPUs 104A-D in the first virtual machine 102A were connected by a first type (i.e., high-speed) interconnects 108A-F and the GPUs 106A-D in the second virtual machine 102B were also connected by a first type (i.e., high-speed) interconnects 110A-F. Each domain in this example is connected by a second type (i.e., lower speed) interconnect 112.

Referring back to the example depicted in Fig. 2, a first virtual machine 202A can be a first domain and the second virtual machine 202B can be a second domain. In such an example, the GPUs 204A-H in the first virtual machine 202A were connected by a first type (i.e., high-speed) interconnects 208A-H, 212 and the GPUs 206A-H in the second virtual machine 202B were also connected by a first type (i.e., high-speed) interconnects 210A-H, 214. Each domain in this example is connected by a second type (i.e., lower speed) interconnect 216.

Readers will appreciate that GPUs may be members of a particular domain for a variety of reasons. For example, GPUs that are included within the same virtual machine or same physical machine may be considered to be in the same domain. Likewise, GPUs that can communicate with each other over a first type of data communications fabric may be considered to be in a particular domain. In addition, GPUs that can communicate with other GPUs over a data communications connection that exceeds a particular bandwidth threshold may be considered to be in a particular domain. As such, the boundaries of a particular domain may be a function of the type of interconnects that are used to exchange data between multiple GPUs that are members of the domain. Readers will appreciate that an interconnect 'type' can be described by the particular data transfer technology (e.g., hardware fabrics, protocols) that is used to connect the GPUs in the domain, by the data transfer capacity of the interconnect that is used to exchange data between the GPUs in the domain, by some combination thereof, or in some other way.

Figure 5 can include preparing 502, for each domain 508, 510 in the GPU cluster 312, a domain specific representation 506 of the dataset 320 that is stored by GPUs in the domain. Preparing 502 a domain specific representation 506 of the dataset 320 that is stored by GPUs in the domain may be carried out, for example, by aggregating the local representation of each GPU in a particular domain. Aggregating the local representation of each GPU in a particular domain may be carried out, for example, by using the local representation of each GPU in a particular domain as inputs to some computation. For example, the local representation of each GPU in a particular domain may be used as inputs to an OR operation, where the result of the OR operation is the domain specific representation for a particular domain.

Fig. 5 also includes broadcasting 504 the domain specific representation 506 to one or more GPUs in another domain of the GPU cluster 312. For example, one or more GPUs 310A-B in the first domain 508 may broadcast 504 the domain specific representation 506 of the portions 318A-B of the dataset 320 that are stored within GPUs 310A-B in the first domain 508 to one or more GPUs 310C, 310N in a second domain 510. Likewise, one or more GPUs 310C-N in the second domain 510 may broadcast 504 the domain specific representation 506 of the portions 318C-N of the dataset 320 that are stored within GPUs 310C-N in the second domain 510 to one or more GPUs 310A-B in the first domain 508.

Readers will appreciate that broadcasting 504 the domain specific representation 506 to one or more GPUs in another domain of the GPU cluster 312 may be carried out, for example, by transmitting data over an interconnect that couples the first domain 508 and the second domain 510 for data communications. For example, and referring to Fig. 1, if one virtual machine 102A in Fig. 1 is a first domain 508 and a second virtual machine 102B in Fig. 1 is a second domain 510, broadcasting 504 the domain specific representation 506 to one or more GPUs in another domain can be carried out by transmitting the domain specific representation 506 over interconnect 112 in Fig. 1. More specifically, the first virtual machine 102A can transmit its domain specific representation 506 to the second virtual machine 102B over the interconnect 112, and the second virtual machine 102B can transmit its domain specific representation 506 to the first virtual machine 102A over the interconnect 112. In each embodiment, a network interface or some other component within each virtual machine 102A-B may be used to receive such data and store such data in a location that is accessible by the GPUs 104A-D, 106A-D in each virtual machine 102A-B.

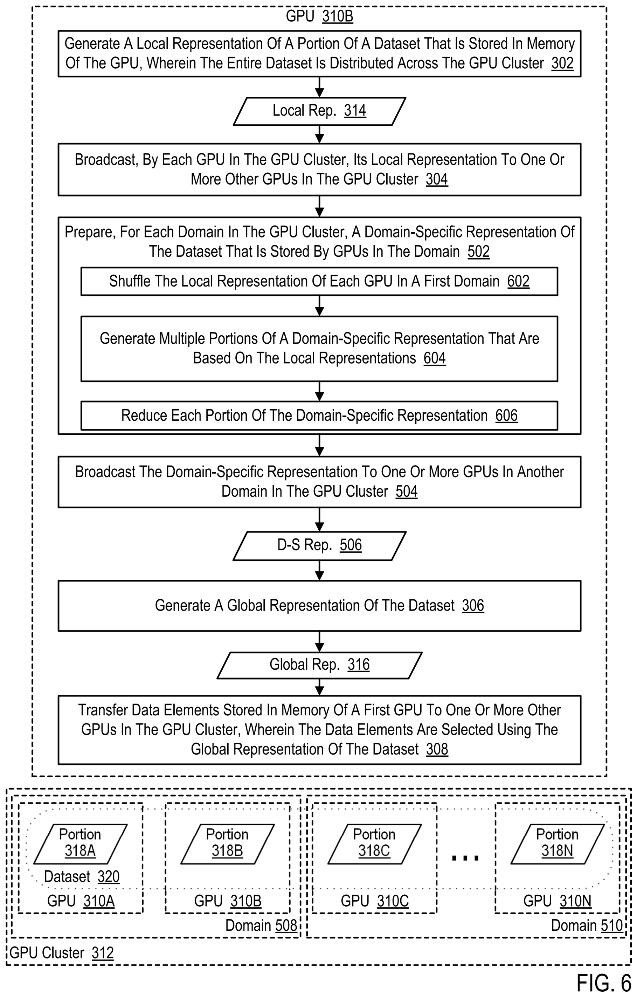

For further explanation, Fig. 6 sets forth a flow chart illustrating an additional example method of accelerating queries using multiple GPUs in accordance with some embodiments. In Fig. 6. preparing 502 a domain specific representation 506 of the dataset 320 includes shuffling 602, by each GPU 310A-B in a first domain 508, a portion of its local representation 314. Shuffling 602 a portion of a local representation may be carried out, for example, using a shuffle operation. The shuffle operation can be an operation that partitions (or re-partitions) some data and distributes data between the GPUs 310A-B, typically to ensure that related pieces of data are grouped together for further processing. The shuffle operation can include a map phase to pre-process data, a portioning phase to determine how to group and distribute the data, data transfer phase where the data is exchanged (e.g., pushed, pulled), and a post-processing reduce phase to produce a final output. In such an example, because each GPU 310A-B in a first domain 508 shuffles 602 a portion of its local representation 314, a first GPU 310A will send a portion of its local representation 314 to the second GPU 310B, and vice versa. For example, a first GPU 310A may send a Bloom filter to the second GPU 310B that can be used to identify data elements that are included in the portion 318A of the dataset 320 that is stored by the first GPU 310A, and the second GPU 310B may send a Bloom filter to the first GPU 310A that can be used to identify data elements that are included in the portion 318B of the dataset 320 that is stored by the second GPU 310B.

Preparing 502 a domain specific representation 506 of the dataset 320 can also include generating 604, by each GPU 310A-B in the first domain 508, a portion of a domain specific representation that is based on local representations received from other GPUs 310A-B in the first domain 508. The domain specific representation 506 may be embodied as some metadata representation of the portions 318A-N of the dataset 320 that are stored in memory of the GPUs 310A-N that are in a particular domain 508, 510. For example, a domain specific representation 506 for domain 508 may be embodied as a metadata representation of the portions 318A-B of the dataset 320 that are stored in memory of GPUs 310A-B, whereas a domain specific representation 506 for domain 510 may be embodied as a metadata representation of the portions 318C-N of the dataset 320 that are stored in memory of GPUs 310C-N.

The domain specific representation 506 may be a 'metadata representation' as the domain specific representation 506 can be information that describes the portions of the dataset 320 that are stored in memory of the GPUs that are in a particular domain, without being an actual copy of the portions of the dataset. Likewise, the domain specific representation 506 may include information that makes the portion of the dataset 320 easier to find, use, or manage.

Generating 604 a portion of the domain specific representation that is based on local representations 314 received from other GPUs 310A-B in the first domain 508 may be carried out, for example, by using local representations received from other GPUs 310A-B in the first domain 508 as inputs to some computational function. The portion of the domain specific representation may therefore be the output of the computational function. In an exemplary embodiment, each local representation 314 may be an m-bit Bloom filter. In this embodiment, generating 604 a portion of the domain specific representation that is based on local representations 314 received from other GPUs 310A-B in the first domain 508 may be carried out, for example, by performing a bitwise OR that uses the local representations 314 of each GPU 310A-B in the first domain 508 as inputs. For example, a first GPU 310A in the first domain 508 may use its own local representation, as well as local representations received from other GPUs 310B in the first domain 508, as inputs to a bitwise OR. The result of such a bitwise OR can represent a portion of the domain specific representation for the first domain 508. Readers will appreciate that other GPUs 310C-N in other domains 510 may similarly perform such functions to generate their own domain specific representations of the portions of the dataset 320 that are stored by the GPUs 310C-N in that particular domain 510.

Readers will appreciate that each GPU in a particular domain can generate 604 only a portion of a domain specific representation. In some embodiments, a portion of the domain specific representation may not include the entire domain specific representation 506. Consider an example in which each local representation is an m-bit Bloom filter. In such example, each of the GPUs 310A-B in a first domain 508 may exchange their local representations such that GPU 310A has both a copy of its m-bit Bloom filter and the m-bit Bloom filter for GPU 310B. GPU 310B would similarly have a copy of both its m-bit Bloom filter and the m-bit Bloom filter for GPU 310A. At that point, each GPU 310A-B can do a bitwise OR of the two m-bit Bloom filters and each GPU 310A-B can produce identical, duplicated copies of the domain specific representation 506.

Rather than having each GPU 310A-B have duplicated data and perform duplicated operations, however, efficiencies can be introduced if each GPU 310A-B is responsible for generating 604 only a portion of a domain specific representation. For example, GPU 310A may be responsible for performing a bitwise OR on the first m/2 bits of each m-bit Bloom filter and GPU 310B may be responsible for performing a bitwise OR on the second m/2 bits of each m-bit Bloom filter. In such an example, GPU 310A would generate 604 the first m/2 bits of the domain specific representation (i.e., the first 'half') and GPU 310B would generate 604 the second m/2 bits of the domain specific representation (i.e., the second 'half'). In this example, efficiencies arise because the amount of data exchanged between the GPUs 310A-B is reduced. As ancillary benefits, each GPU has to do a bitwise OR on fewer bits, each GPU has to store fewer bits, and so on. In fact, additional optimizations can involve shuffling 602 the local representations 314 of each GPU 310A-B to only send the portions of each local representation 314 to a particular GPU 310A-B that corresponds to the portion of the domain specific representation that the particular GPU 310A-B is responsible for generating 604. In other embodiments, the GPUs 310A-B can exchange their entire local representations and/or each GPU 310A-B can independently generate the entire domain specific representation 506.

In Fig. 6, preparing 502 a domain specific representation 506 of the dataset 320 can also include reducing 606 the domain specific representation. Reducing 606 the domain specific representation 506 may be carried out, for example, by combining a set of values into a single value. The set of values may be combined into a single value by performing a computational function such as, for example, performing a bitwise OR on the set of values, multiplying the set of values, summing the set of values, or performing some other function to efficiently aggregate data. The computations in a reduction operation may be performed in parallel (rather than computing results sequentially), including aggregating results from multiple parallel threads.

Readers will appreciate that reducing 606 the domain specific representation 506 may be carried out to decrease the amount of data that is transferred over one or more inter-domain interconnects. As described above, in some embodiments two distinct VMs may represent two distinct domains. As such, the interconnects that are used for inter-domain data communications may be relatively slow interconnects. Because the interconnects that are used for inter-domain data communications may be relatively slow interconnects, it can be beneficial to reduce the amount of data that is transferred across such interconnects. Reducing the amount of data that is transferred across such interconnects can be carried out, at least in part, by reducing 606 the domain specific representation 506 prior to transmitting the domain specific representation 506 over such interconnects.

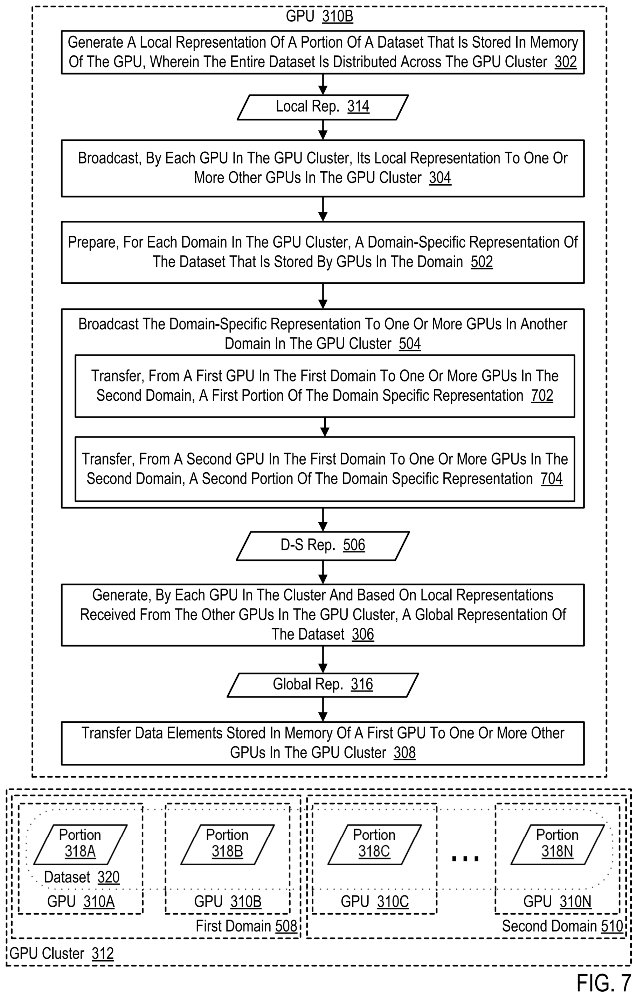

For further explanation, Fig. 7 sets forth a flow chart illustrating an additional example method of accelerating queries using multiple GPUs in accordance with some embodiments. The example in Fig. 7 includes transferring 702, from a first GPU 310A in the first domain 508 to one or more GPUs 310C in the second domain 510, a first portion of the domain specific representation 506. Fig. 7 also includes transferring 704, from a second GPU 310B in the first domain 508 to one or more GPUs 310N in the second domain 510, a second portion of the domain specific representation 506. As discussed above, different GPUs within a particular domain may be responsible for creating some portion of the domain specific representation 506. In some embodiments, these distinct portions may also be transferred 702, 704 separately so that the responsibility of broadcasting 504 the domain specific representation 506 to GPUs in another domain is distributed amongst multiple source GPUs in a source domain.

Continuing with the example described above where GPU 310A generates 604 the first m/2 bits of the domain specific representation and GPU 310B generates 604 the second m/2 bits of the domain specific representation, the first GPU may transfer 702 the first m/2 bits of the domain specific representation to GPU 310C in the second domain 510 and GPU 310B can transfer 704 the second m/2 bits of the domain specific representation to GPU 310N. In some embodiments, each of the transfers 702, 704 may even occur at least partially in parallel. Each of the transfers 702, 704 may occur at least partially in parallel, for example, if there is some overlap in the transfers 702, 704 in time. For example, if both transfer 702, 704 are in progress at some point in time, the transfers 702, 704 occur at least partially in parallel. Readers will appreciate, however, that there is no requirement that the transfers 702, 704 start at the same time or finish at the same time in order for the transfers 702, 704 to occur at least partially in parallel.

Readers will appreciate that although the interconnects between two domains (e.g., two virtual machines) are represented as a single interconnect, such an interconnect may support bi-directional traffic in parallel through the usage of multiple lanes, multiple links, or in some other way. In fact, in some embodiments multiple interconnects may exist between two domains to facilitate parallel, bi-directional traffic.

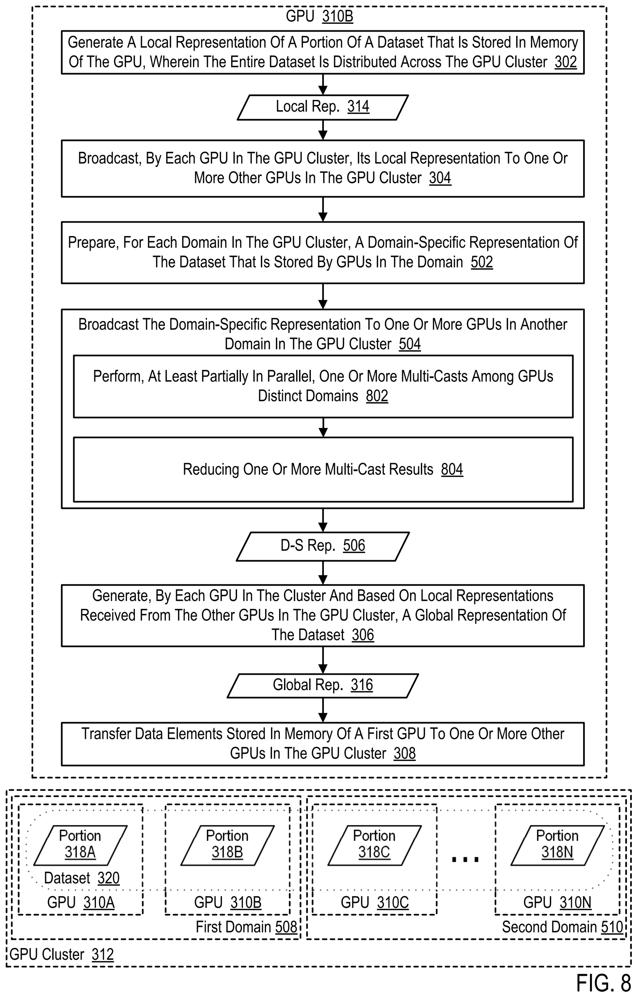

Fig. 8 sets forth a flow chart illustrating an additional example method of accelerating queries using multiple GPUs in accordance with some embodiments. The example of Fig. 8 includes performing 802, at least partially in parallel, one or more multicast operations among GPUs distinct domains 508, 510. The one or more multicast operations may be embodied as one or more data transfer operations that results in one or more GPUs 310A-B in a first domain sending its portion of a domain specific representation 506 for the first domain 508 to one or more GPUs 310C-N in a second domain 510. Likewise, one or more GPUs 310C-N in a second domain 510 may send its portion of a domain specific representation 506 for the second domain 510 to GPUs 310A-B in the first domain. The domain specific representations 506 may be generated as described elsewhere in the present disclosure. Performing 802 the one or more multicast operations among GPUs distinct domains 508, 510 may be carried out using data communications protocols and interconnects as described elsewhere in the present disclosure.

The example depicted in Fig. 8 also includes reducing 804 one or more multicast results. Reducing 804 one or more multicast results may be carried out, for example, by combining a set of values into a single value. The set of values may be combined into a single value by performing a computational function such as, for example, performing a bitwise OR on the set of values, multiplying the set of values, summing the set of values, or performing some other function to efficiently aggregate data. The computations in a reduction operation may be performed in parallel (rather than computing results sequentially), including aggregating results from multiple parallel threads.

Readers will appreciate that reducing 804 one or more multicast results may be carried out to decrease the amount of data that is transferred over one or more interconnects. As described above, the multi-GPU systems that are used for query acceleration can include heterogeneous interconnects. Because the interconnects are heterogeneous and the ability to transfer data across those interconnects can be limited and inconsistent, it can be beneficial to reduce the amount of data that is transferred across such interconnects. Reducing the amount of data that is transferred across such interconnects can be carried out, at least in part, by reducing 804 one or more multicast results prior to actually multicasting data over such interconnects or transferring the results of such multicasts prior to subsequent transfers of the multicast results.

In embodiments of the present disclosure, once the reduction operations are performed and domain-specific representations are broadcast 504 between GPUs in different domains 508, 510, the GPUs within a particular domain 508, 510 collectively have access to the entire global representation 316, with portions distributed amongst the GPUs. Because individual GPUs in a particular domain 508, 510 may only include a portion of the global representation 316, the GPUs within a particular domain 508, 510 may initiate an intra-domain data exchange. For example, the entire global representation 316 may be constructed at every GPU within a domain by each GPU within the domain broadcasting its portion of the global representation 316 to the other GPUs in the domain. Once a particular GPU has each portion of the global representation 316, that GPU may merge the portions that it has received to form a local copy of the entire global representation 316.

Readers will appreciate that in addition to some of the embodiments described above, other embodiments are within the scope of the present disclosure that include fewer limitations than the embodiments described above. For example, many of the embodiments described above include generating 302 a local representation 314 of a portion 318A-N of the dataset 320, each GPU 310A-N broadcasting 304 its local representation 314 to one or more other GPUs 310A-N, generating 306 a global representation 316 of the dataset 320, and transferring 308 data elements stored in memory of a particular GPU 310B using the global representation 316 of the dataset 320. As an example of an embodiment with fewer steps, in some embodiments a global representation 316 of a dataset 320 may not be generated and the local representations 314 may be utilized to find data elements. Such an embodiment could include generating 302 a local representation 314 of a portion 318A-N of the dataset 320, each GPU 310A-N broadcasting 304 its local representation 314 to one or more other GPUs 310A-N, and transferring 308 data elements stored in memory of a particular GPU 310B using the local representations 314.

As an example of an additional embodiment with fewer steps, in some embodiments the GPUs 310A-N may not be responsible for broadcasting 304 their local representations and the local representations may be obtained in some other way. Such an embodiment could include generating 302 a local representation 314 of a portion 318A-N of the dataset 320, generating 306 a global representation 316 of the dataset 320, and transferring 308 data elements stored in memory of a particular GPU 310B using the global representation 316 of the dataset 320. In other embodiments, other steps may be eliminated or modified.

Readers will further appreciate that in other embodiments described in the present disclosure, additional elements are added to the base elements of generating 302 a local representation 314 of a portion 318A-N of the dataset 320, each GPU 310A-N broadcasting 304 its local representation 314 to one or more other GPUs 310A-N, generating 306 a global representation 316 of the dataset 320, and transferring 308 data elements stored in memory of a particular GPU 310B using the global representation 316 of the dataset 320. These embodiments that add elements to the base elements described above may similarity be built on fewer base elements as described above.

Readers will further appreciate that where some embodiments described above add multiple additional elements to the base elements, other embodiments may only add a subset of the additional elements. Consider the embodiment of Fig. 5 that includes preparing 502, for each domain 508, 510 in the GPU cluster 312, a domain specific representation 506 of the dataset 320 that is stored by GPUs in the domain and broadcasting 504 the domain specific representation 506 to one or more GPUs in another domain of the GPU cluster 312. In other embodiments, a domain specific representation 506 may be prepared 502, but the domain specific representation 506 could be accessed in ways that don't require broadcasting 504 the domain specific representation 506. In other embodiments, only a subset of the additional elements may be added to a set of base elements.

Readers will appreciate that although the examples described above related to embodiments where GPUs are used to accelerate queries, in other embodiments other computing devices may be leverage for query acceleration. For example, in some embodiments a cluster of central processing units ('CPUs') may take the place of the GPUs described above, in some embodiments a cluster of field-programmable gate arrays ('FPGAs') may take the place of the GPUs described above, in other embodiments Application-Specific Integrated Circuits ('ASICs') may take the place of the GPUs described above, in other embodiments Tensor Processing Units

('TPUs') may take the place of the GPUs described above, Tensor Query Processors ('TQPs') may take the place of the GPUs described above, or other computing devices may take the place of the GPUs described above. In some embodiments, combinations of disparate computing devices may take the place of the GPUs described above.

The examples described above include embodiments where standard Bloom filters are used to carry out many of the steps described above. Readers will appreciate that in other embodiments, different Bloom filter variants such as, for example, counting Bloom filters, scalable Bloom filters, blocked Bloom filters, or other Bloom filter variant may be leveraged. In such embodiments, the filter construction, membership test, and reduction operations could be different depending on the type of filter that is used, while still ultimately using the filters to reduce exchanges of unnecessary data.

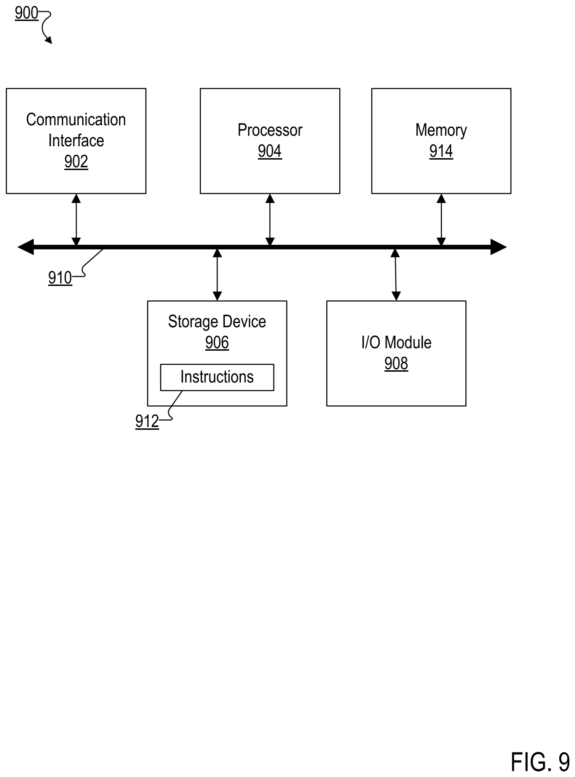

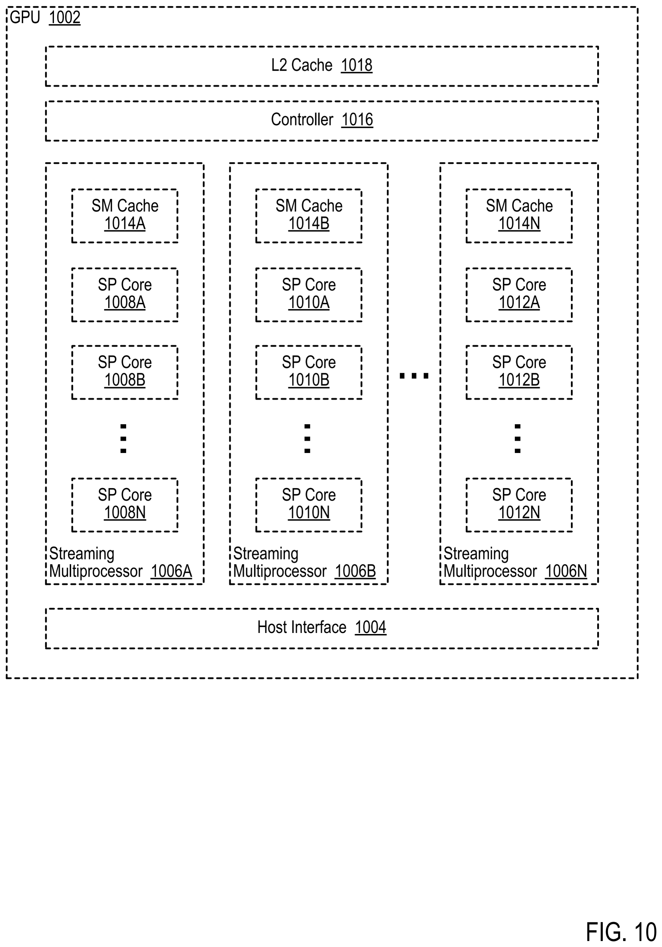

Readers will appreciate that the following figures depict examples of technology that may be used to support query acceleration as described in the present disclosure. For example, Fig. 9 depicts an example of a computing device that may be specifically configured to perform one or more of the processes described in the present disclosure. Fig. 10 depicts an example of a GPU that may be used to support query acceleration as described in the present disclosure.

For further explanation, the sections included below provide some details regarding technologies that may be used to support accelerating queries. For example, Fig. 9 sets forth an example of a computing device that may be used for some portion of accelerating queries in accordance with some embodiments. As an additional example of technologies that may be used to support accelerating queries, Fig. 10 sets forth an example of a computing device that may be used for some portion of accelerating queries in accordance with some embodiments.

For further explanation, Fig. 9 illustrates an exemplary computing device 900 that may be specifically configured to perform one or more of the processes described herein. As shown in Fig. 9, computing device 900 may include a communication interface 902, a processor 904, a storage device 906, an input/output (I/O) module 908, and computer memory 914 communicatively connected one to another via a communication infrastructure 910. While an exemplary computing device 900 is shown in Fig. 9, the components illustrated in Fig. 9 are not intended to be limiting. Additional or alternative components may be used in other embodiments. Components of computing device 900 shown in Fig. 9 will now be described in additional detail.

Communication interface 902 may be configured to communicate with one or more computing devices. Examples of communication interface 902 include, without limitation, a wired network interface (such as a network interface card), a wireless network interface (such as a wireless network interface card), a modem, an audio/video connection, and any other suitable interface.

Processor 904 generally represents any type or form of processing unit capable of processing data and/or interpreting, executing, and/or directing execution of one or more of the instructions, processes, and/or operations described herein. Processor 904 may perform operations by executing computer-executable instructions 912 (e.g., an application, software, code, and/or other executable data instance) stored in storage device 906.

Storage device 906 may include one or more data storage media, devices, or configurations and may employ any type, form, and combination of data storage media and/or device. For example, storage device 906 may include, but is not limited to, any combination of non-volatile media and/or volatile media. Electronic data, including data described herein, may be temporarily and/or permanently stored in storage device 906. For example, data representative of computer-executable instructions 912 configured to direct processor 904 to perform any of the operations described herein may be stored within storage device 906. In some examples, data may be arranged in one or more databases residing within storage device 906.

I/O module 908 may include one or more I/O modules configured to receive user input and provide user output. I/O module 908 may include any hardware, firmware, software, or combination thereof supportive of input and output capabilities. For example, I/O module 908 may include hardware and/or software for capturing user input, including, but not limited to, a keyboard or keypad, a touchscreen component (e.g., touchscreen display), a receiver (e.g., an RF or infrared receiver), motion sensors, and/or one or more input buttons.

I/O module 908 may include one or more devices for presenting output to a user, including, but not limited to, a graphics engine, a display (e.g., a display screen), one or more output drivers (e.g., display drivers), one or more audio speakers, and one or more audio drivers. In certain embodiments, I/O module 908 is configured to provide graphical data to a display for presentation to a user. The graphical data may be representative of one or more graphical user interfaces and/or any other graphical content as may serve a particular implementation. In some examples, any of the systems, computing devices, and/or other components described herein may be implemented by computing device 900.

For further explanation, Fig. 10 sets forth an example of a GPU 1002 that may be used for some portion of accelerating queries in accordance with some embodiments. The example GPU 1002 include a plurality of streaming multiprocessors 1006A-N. One or more of the streaming multiprocessors 1006A-N may be organized as graphics processing clusters ('GPCs'), with each of the streaming multiprocessors 1006A-N including multiple Compute Unified Device Architecture ('CUDA') cores that perform computations and handle parallel task execution. Alternatively, Radeon Open Compute ('ROCm') cores or Open Computing Language ('OpenCL') cores may be used. In this example the cores are referred to as streaming processor cores 1008A-N, 1010A-N, 1012A-N that can carry out mathematical calculations or other computations.

Each of the streaming multiprocessors 1006A-N includes a local cache 1014A-N (an L1 cache), and each of the streaming multiprocessors 1006A-N can access a shared L2 cache 1018. Each cache 1014A-N and 10118 may be used to store frequently used data closer to the processing cores, thereby reducing access times.

The example GPU 1002 also includes a controller 1016. The controller 1016 may be embodied as logic for coordinating various activities components within the GPU 1002, such as the streaming multiprocessors 1006A-N. The controller 1016 can performs tasks such as, for example, balancing load across the streaming multiprocessors 1006A-N, dispatching tasks, and so on.

The example GPU 1002 includes a host interface 1004. The host interface 1004 can enable communications between the GPU 1002 and a host system. Such a host interface 1004 can include, for example, a PCIe interface, an NVLink interface, an InfiniBand interface, an AMD xGMI interface, an Infinity Fabric interface, and so on. Readers will appreciate that GPUs that may be used to support query acceleration in accordance with embodiments of the present disclosure can include fewer components, additional components, or different combinations of components than the example GPU 1002

Advantages and features of the present disclosure can be further described by the following statements:
1. A method of accelerating queries using a multiple graphics processing units ('GPUs') in a GPU cluster, including: generating, by each GPU in the GPU cluster, a local representation of a portion of a dataset that is stored in memory of the GPU, wherein the entire dataset is distributed across the GPU cluster; broadcasting, by each GPU in the GPU cluster, its local representation to one or more other GPUs in the GPU cluster; generating, by each GPU in the cluster and based on local representations received from the other GPUs in the GPU cluster, a global representation of the dataset; and transferring data elements stored in memory of a particular GPU, wherein the data elements are selected using the global representation of the dataset.
2. A method of statement 1 each local representation is a local Bloom filter that identifies each element of the dataset that is stored in local memory of the GPU; and generating, by each GPU in the cluster and based on local representations received from the other GPUs in the GPU cluster, a global representation of the dataset includes aggregating each local Bloom filter to form a global Bloom filter.
3. A method of statement 2 or statement 1 further comprising: preparing, for each domain in the GPU cluster, a domain specific representation of the dataset that is stored by GPUs in the domain, including: shuffling the local representation of each GPU in the domain; generating multiple portions of a domain specific representation that are based on the local representations; and reducing each portion of the domain specific representation.
4. A method of statement 3, statement 2, or statement 1 further comprising broadcasting the domain specific representation to one or more GPUs in another domain in the GPU cluster.
5. A method of statement 4, statement 3, statement 2, or statement 1 wherein broadcasting the domain specific representation to GPUs in a second domain further comprises: transferring, from a first GPU in the first domain to one or more GPUs in the second domain, a first portion of the domain specific representation; and transferring, from a second GPU in the first domain to one or more GPUs in the second domain, a second portion of the domain specific representation.
6. A method of statement 5, statement 4, statement 3, statement 2, or statement 1 wherein the transfers occur at least partially in parallel.
7. A method of statement 6, statement 5, statement 4, statement 3, statement 2, or statement 1 wherein broadcasting the domain specific representation to GPUs in a second domain further comprises: performing, at least partially in parallel, one or more multicasts among GPUs distinct domains; and reducing one or more multicast results.
8. An apparatus comprising a memory and one or more processing devices, operatively coupled to the memory, the one or more processing devices configured to: generate a local representation of a portion of a dataset that is distributed across the GPU cluster; broadcast the local representation to one or more other GPUs in the GPU cluster; generate, based on local representations received from the other GPUs in the GPU cluster, a global representation of the dataset; and transfer data elements stored in memory of the GPU, wherein the data elements are selected using the global representation of the dataset.
9. An apparatus of statement 8 wherein each local representation is a local Bloom filter that identifies, at a minimum, each element of the dataset that is stored in local memory of the GPU; and wherein to generate, based on local representations received from the other GPUs in the GPU cluster, a global representation of the dataset the one or more processing devices are further configured to aggregate each local Bloom filter to form a global Bloom filter.
10. An apparatus statement 9 or statement 8 wherein the one or more processing devices are further configured to: prepare a domain specific representation of the dataset that is stored by GPUs in the domain, wherein the processing device is further configured to: shuffle the local representation of each GPU in the domain; generate multiple portions of a domain specific representation that are based on the local representations; and reduce each portion of the domain specific representation.
11. An apparatus of statement 10, statement 9, or statement 8 wherein the one or more processing devices are further configured to broadcast the domain specific representation to one or more GPUs in another domain in the GPU cluster.
12. An apparatus of statement 11, statement 10, statement 9, or statement 8 wherein to broadcast the domain specific representation to GPUs in a second domain, the one or more processing devices are further configured to: transfer, from a first GPU in the first domain to one or more GPUs in the second domain, a first portion of the domain specific representation; and transfer, from a second GPU in the first domain to one or more GPUs in the second domain, a second portion of the domain specific representation.
13. An apparatus of statement 12, statement 11, statement 10, statement 9, or statement 8 wherein the transfers occur at least partially in parallel.
14. An apparatus of statement 13, statement 12, statement 11, statement 10, statement 9, or statement 8 wherein to broadcast the domain specific representation to GPUs in a second domain, the one or more processing devices are further configured to: perform, at least partially in parallel, one or more multicasts among GPUs distinct domains; and reduce one or more multicast results.
15. A non-transitory computer readable storage medium storing instructions which, when executed, cause a processing device to: generate a local representation of a portion of a dataset that is distributed across the GPU cluster; broadcast the local representation to one or more other GPUs in the GPU cluster; generate, based on local representations generated by other GPUs in the GPU cluster, a global representation of the dataset; and transfer data elements stored in memory of the GPU, wherein the data elements are selected using the global representation of the dataset.
16. The non-transitory computer readable storage medium of statement 15 wherein: each local representation is a local Bloom filter that identifies each element of the dataset that is stored in local memory of the GPU; and wherein to generate, based on local representations generated by other GPUs in the GPU cluster, a global representation of the dataset the one or more processing devices are further configured to aggregate each local Bloom filter to form a global Bloom filter.
17. The non-transitory computer readable storage medium of statement 16 or statement 15 further storing instructions which, when executed, cause a processing device to: prepare a domain specific representation of the dataset that is stored by GPUs in the domain, wherein the processing device is further configured to: shuffle the local representation of each GPU in the domain; generate multiple portions of a domain specific representation that are based on the local representations; and reduce each portion of the domain specific representation.
18. The non-transitory computer readable storage medium of statement 17, statement 16, or statement 15 wherein the one or more processing devices are further configured to broadcast the domain specific representation to one or more GPUs in another domain in the GPU cluster.
19. The non-transitory computer readable storage medium of statement 18, statement 17, statement 16, or statement 15 wherein to broadcast the domain specific representation to GPUs in a second domain, the one or more processing devices are further configured to: transfer, from a first GPU in the first domain to one or more GPUs in the second domain, a first portion of the domain specific representation; and transfer, from a second GPU in the first domain to one or more GPUs in the second domain, a second portion of the domain specific representation, wherein the transfers occur at least partially in parallel.
20. The non-transitory computer readable storage medium of statement 19, statement 18, statement 17, statement 16, or statement 15 wherein to broadcast the domain specific representation to GPUs in a second domain, the one or more processing devices are further configured to: perform, at least partially in parallel, one or more multicasts among GPUs distinct domains; and reduce one or more multicast results.

Although some embodiments are described largely in the context of a system, method, or in some other way, readers will recognize that embodiments of the present disclosure may also take the form of a computer program product disposed upon computer readable storage media for use with any suitable processing system. Such computer readable storage media may be any storage medium for machine-readable information, including magnetic media, optical media, solid-state media, or other suitable media. Examples of such media include magnetic disks in hard drives or diskettes, compact disks for optical drives, magnetic tape, and others as will occur to those of skill in the art. Persons skilled in the art will immediately recognize that any computer system having suitable programming means will be capable of executing the steps described herein as embodied in a computer program product. Persons skilled in the art will recognize also that, although some of the embodiments described in this specification are oriented to software installed and executing on computer hardware, nevertheless, alternative embodiments implemented as firmware or as hardware are well within the scope of the present disclosure.

Readers will appreciate that some embodiments are described in which computer program instructions are executed on computer hardware such as, for example, one or more computer processors. Readers will appreciate that in other embodiments, computer program instructions may be executed on virtualized computer hardware (e.g., one or more virtual machines), in one or more containers, in one or more cloud computing instances (e.g., one or more AWS EC2 instances), in one or more serverless compute instances offered such as those offered by a cloud services provider, in one or more event-driven compute services such as those offered by a cloud services provider, or in some other execution environment.

In some examples, a non-transitory computer-readable medium storing computer-readable instructions may be provided in accordance with the principles described herein. The instructions, when executed by a processor of a computing device, may direct the processor and/or computing device to perform one or more operations, including one or more of the operations described herein. Such instructions may be stored and/or transmitted using any of a variety of known computer-readable media.

A non-transitory computer-readable medium as referred to herein may include any non-transitory storage medium that participates in providing data (e.g., instructions) that may be read and/or executed by a computing device (e.g., by a processor of a computing device). For example, a non-transitory computer-readable medium may include, but is not limited to, any combination of non-volatile storage media and/or volatile storage media. Exemplary non-volatile storage media include, but are not limited to, read-only memory, flash memory, a solid-state drive, a magnetic storage device (e.g., a hard disk, a floppy disk, magnetic tape, etc.), ferroelectric random-access memory ("RAM"), and an optical disc (e.g., a compact disc, a digital video disc, a Blu-ray disc, etc.). Exemplary volatile storage media include, but are not limited to, RAM (e.g., dynamic RAM).

One or more embodiments may be described herein with the aid of method steps illustrating the performance of specified functions and relationships thereof. The boundaries and sequence of these functional building blocks and method steps have been arbitrarily defined herein for convenience of description. Alternate boundaries and sequences can be defined so long as the specified functions and relationships are appropriately performed. Any such alternate boundaries or sequences are thus within the scope and spirit of the claims. Further, the boundaries of these functional building blocks have been arbitrarily defined for convenience of description. Alternate boundaries could be defined as long as the certain significant functions are appropriately performed. Similarly, flow diagram blocks may also have been arbitrarily defined herein to illustrate certain significant functionality.

To the extent used, the flow diagram block boundaries and sequence could have been defined otherwise and still perform the certain significant functionality. Such alternate definitions of both functional building blocks and flow diagram blocks and sequences are thus within the scope and spirit of the claims. One of average skill in the art will also recognize that the functional building blocks, and other illustrative blocks, modules and components herein, can be implemented as illustrated or by discrete components, application specific integrated circuits, processors executing appropriate software and the like or any combination thereof.

While particular combinations of various functions and features of the one or more embodiments are expressly described herein, other combinations of these features and functions are likewise possible. The present disclosure is not limited by the particular examples disclosed herein and expressly incorporates these other combinations.

### The following is a list of further preferred embodiments of the invention:

Embodiment 1. A method of accelerating queries using a multiple graphics processing units ('GPUs') 310A-N in a GPU cluster 312, comprising:
   generating 302, by each GPU 310A-N in the GPU cluster 312, a local representation 314 of a portion 318A-N of a dataset 320 that is stored in memory of the GPU 310A-N, wherein the dataset 320 is distributed across the GPU cluster 312;
   broadcasting 304, by each GPU 310A-N in the GPU cluster 312, its local representation 314 to one or more other GPUs 310A-N in the GPU cluster 312;
   generating 306, by each GPU 310A-N in the cluster 312 and based on local representations 314 received from the other GPUs 310A-N in the GPU cluster 312, a global representation 316 of the dataset 320; and
   transferring 308 data elements stored in memory of a particular GPU 310A-N, wherein the data elements are selected using the global representation 316 of the dataset 320.
Embodiment 2. The method of embodiment 1 wherein:
   each local representation is a local Bloom filter that identifies each element of the dataset that is stored in local memory of the GPU; and
   generating, by each GPU in the cluster and based on local representations received from the other GPUs in the GPU cluster, a global representation of the dataset includes aggregating each local Bloom filter to form a global Bloom filter.
Embodiment 3. The method of embodiment 1 further comprising:
   preparing, for each domain in the GPU cluster, a domain specific representation of the dataset that is stored by GPUs in the domain, including:
   shuffling the local representation of each GPU in the domain;
   generating multiple portions of a domain specific representation that are based on the local representations; and reducing each portion of the domain specific representation.
Embodiment 4. The method of embodiment 3 further comprising broadcasting the domain specific representation to one or more GPUs in another domain in the GPU cluster.
Embodiment 5. The method of embodiment 4 wherein broadcasting the domain specific representation to GPUs in a second domain further comprises:
   transferring, from a first GPU in the first domain to one or more GPUs in the second domain, a first portion of the domain specific representation; and
   transferring, from a second GPU in the first domain to one or more GPUs in the second domain, a second portion of the domain specific representation.
Embodiment 6. The method of embodiment 5 wherein the transfers occur at least partially in parallel.
Embodiment 7. The method of embodiment 4 wherein broadcasting the domain specific representation to GPUs in a second domain further comprises:
   performing, at least partially in parallel, one or more multicast operations among GPUs distinct domains; and
   reducing one or more multicast results.
Embodiment 8. An apparatus for accelerating queries using a multiple GPUs in a GPU cluster, comprising:
   a memory 914; and
   one or more processing devices 904, operatively coupled to the memory 914, the one or more processing devices configured to:
   generate 302 a local representation 314 of a portion 318A-N of a dataset 320 that is distributed across the GPU cluster 312;
   broadcast 304 the local representation 314 to one or more other GPUs 310A-N in the GPU cluster 312;
   generate 306, based on local representations 314 received from the other GPUs 310A-N in the GPU cluster 312, a global representation 316 of the dataset 320; and
   transfer 308 data elements stored in memory of the GPU 310A-N, wherein the data elements are selected using the global representation 316 of the dataset 320.
Embodiment 9. The apparatus of embodiment 8 wherein:
   each local representation is a local Bloom filter that identifies each element of the dataset that is stored in local memory of the GPU; and
   wherein to generate, based on local representations received from the other GPUs in the GPU cluster, a global representation of the dataset the one or more processing devices are further configured to aggregate each local Bloom filter to form a global Bloom filter.
Embodiment 10. The apparatus of embodiment 8 wherein the one or more processing devices are further configured to:
   prepare a domain specific representation of the dataset that is stored by GPUs in the domain, wherein the processing device is further configured to:
   shuffle the local representation of each GPU in the domain;
   generate multiple portions of a domain specific representation that are based on the local representations; and
   reduce each portion of the domain specific representation.
Embodiment 11. The apparatus of embodiment 10 wherein the one or more processing devices are further configured to broadcast the domain specific representation to one or more GPUs in another domain in the GPU cluster.
Embodiment 12. The apparatus of embodiment 11 wherein to broadcast the domain specific representation to GPUs in a second domain, the one or more processing devices are further configured to:
   transfer, from a first GPU in the first domain to one or more GPUs in the second domain, a first portion of the domain specific representation; and
   transfer, from a second GPU in the first domain to one or more GPUs in the second domain, a second portion of the domain specific representation.
Embodiment 13. The apparatus of embodiment 12 wherein the transfers occur at least partially in parallel.
Embodiment 14. The apparatus of embodiment 11 wherein to broadcast the domain specific representation to GPUs in a second domain, the one or more processing devices are further configured to:
   perform, at least partially in parallel, one or more multicast operations among GPUs distinct domains; and
   reduce one or more multicast results.
Embodiment 15. A non-transitory computer readable storage medium storing instructions which, when executed, cause a processing device to:
   generate 302 a local representation 314 of a portion 318A-N of a dataset 320 that is distributed across a GPU cluster 312;
   broadcast 304 the local representation 314 to one or more other GPUs 310A-N in the GPU cluster 312;
   generate 306, based on local representations 314 generated by other GPUs 310A-N in the GPU cluster 312, a global representation 316 of the dataset 320; and
   transfer 308 data elements stored in memory of the GPU 310A-N, wherein the data elements are selected using the global representation 316 of the dataset 320.
Embodiment 16. The non-transitory computer readable storage medium of embodiment 15 wherein:
   each local representation is a local Bloom filter that identifies each element of the dataset that is stored in local memory of the GPU; and
   wherein to generate, based on local representations generated by other GPUs in the GPU cluster, a global representation of the dataset the one or more processing devices are further configured to aggregate each local Bloom filter to form a global Bloom filter.
Embodiment 17. The non-transitory computer readable storage medium of embodiment 15 further storing instructions which, when executed, cause a processing device to:
   prepare a domain specific representation of the dataset that is stored by GPUs in the domain, wherein the processing device is further configured to:
   shuffle the local representation of each GPU in the domain;
   generate multiple portions of a domain specific representation that are based on the local representations; and
   reduce each portion of the domain specific representation.
Embodiment 18. The non-transitory computer readable storage medium of embodiment 17 wherein the one or more processing devices are further configured to broadcast the domain specific representation to one or more GPUs in another domain in the GPU cluster.
Embodiment 19. The non-transitory computer readable storage medium of embodiment 18 wherein to broadcast the domain specific representation to GPUs in a second domain, the one or more processing devices are further configured to:
   transfer, from a first GPU in the first domain to one or more GPUs in the second domain, a first portion of the domain specific representation; and
   transfer, from a second GPU in the first domain to one or more GPUs in the second domain, a second portion of the domain specific representation, wherein the transfers occur at least partially in parallel.
Embodiment 20. The non-transitory computer readable storage medium of embodiment 18 wherein to broadcast the domain specific representation to GPUs in a second domain, the one or more processing devices are further configured to:
   perform, at least partially in parallel, one or more multicast operations among GPUs distinct domains; and
   reduce one or more multicast results.

## Claims

1. A method of accelerating queries using a multiple graphics processing units ('GPUs') 310A-N in a GPU cluster 312, comprising:
generating 302, by each GPU 310A-N in the GPU cluster 312, a local representation 314 of a portion 318A-N of a dataset 320 that is stored in memory of the GPU 310A-N, wherein the dataset 320 is distributed across the GPU cluster 312;
broadcasting 304, by each GPU 310A-N in the GPU cluster 312, its local representation 314 to one or more other GPUs 310A-N in the GPU cluster 312;
generating 306, by each GPU 310A-N in the cluster 312 and based on local representations 314 received from the other GPUs 310A-N in the GPU cluster 312, a global representation 316 of the dataset 320; and
transferring 308 data elements stored in memory of a particular GPU 310A-N, wherein the data elements are selected using the global representation 316 of the dataset 320.

2. The method of claim 1 wherein:
each local representation is a local Bloom filter that identifies each element of the dataset that is stored in local memory of the GPU; and
generating, by each GPU in the cluster and based on local representations received from the other GPUs in the GPU cluster, a global representation of the dataset includes aggregating each local Bloom filter to form a global Bloom filter.

3. The method of claim 1 further comprising:
preparing, for each domain in the GPU cluster, a domain specific representation of the dataset that is stored by GPUs in the domain, including:
shuffling the local representation of each GPU in the domain;
generating multiple portions of a domain specific representation that are based on the local representations; and
reducing each portion of the domain specific representation.

4. The method of claim 3 further comprising broadcasting the domain specific representation to one or more GPUs in another domain in the GPU cluster.

5. The method of claim 4 wherein broadcasting the domain specific representation to GPUs in a second domain further comprises:
transferring, from a first GPU in the first domain to one or more GPUs in the second domain, a first portion of the domain specific representation; and
transferring, from a second GPU in the first domain to one or more GPUs in the second domain, a second portion of the domain specific representation.

6. The method of claim 5 wherein the transfers occur at least partially in parallel.

7. The method of claim 4 wherein broadcasting the domain specific representation to GPUs in a second domain further comprises:
performing, at least partially in parallel, one or more multicast operations among GPUs distinct domains; and
reducing one or more multicast results.

8. An apparatus for accelerating queries using a multiple GPUs in a GPU cluster, comprising:
a memory 914; and
one or more processing devices 904, operatively coupled to the memory 914, the one or more processing devices configured to:
generate 302 a local representation 314 of a portion 318A-N of a dataset 320 that is distributed across the GPU cluster 312;
broadcast 304 the local representation 314 to one or more other GPUs 310A-N in the GPU cluster 312;
generate 306, based on local representations 314 received from the other GPUs 310A-N in the GPU cluster 312, a global representation 316 of the dataset 320; and
transfer 308 data elements stored in memory of the GPU 310A-N, wherein the data elements are selected using the global representation 316 of the dataset 320.

9. The apparatus of claim 8 wherein:
each local representation is a local Bloom filter that identifies each element of the dataset that is stored in local memory of the GPU; and
wherein to generate, based on local representations received from the other GPUs in the GPU cluster, a global representation of the dataset the one or more processing devices are further configured to aggregate each local Bloom filter to form a global Bloom filter.

10. The apparatus of claim 8 or 9 wherein the one or more processing devices are further configured to:
prepare a domain specific representation of the dataset that is stored by GPUs in the domain, wherein the processing device is further configured to:
shuffle the local representation of each GPU in the domain;
generate multiple portions of a domain specific representation that are based on the local representations; and
reduce each portion of the domain specific representation.

11. The apparatus of claim 10 wherein the one or more processing devices are further configured to broadcast the domain specific representation to one or more GPUs in another domain in the GPU cluster.

12. The apparatus of claim 11 wherein to broadcast the domain specific representation to GPUs in a second domain, the one or more processing devices are further configured to:
transfer, from a first GPU in the first domain to one or more GPUs in the second domain, a first portion of the domain specific representation; and
transfer, from a second GPU in the first domain to one or more GPUs in the second domain, a second portion of the domain specific representation and/or
wherein the transfers occur at least partially in parallel.

13. The apparatus of claim 11 wherein to broadcast the domain specific representation to GPUs in a second domain, the one or more processing devices are further configured to:
perform, at least partially in parallel, one or more multicast operations among GPUs distinct domains; and
reduce one or more multicast results.

14. A non-transitory computer readable storage medium storing instructions which, when executed, cause a processing device to:
generate 302 a local representation 314 of a portion 318A-N of a dataset 320 that is distributed across a GPU cluster 312;
broadcast 304 the local representation 314 to one or more other GPUs 310A-N in the GPU cluster 312;
generate 306, based on local representations 314 generated by other GPUs 310A-N in the GPU cluster 312, a global representation 316 of the dataset 320; and
transfer 308 data elements stored in memory of the GPU 310A-N, wherein the data elements are selected using the global representation 316 of the dataset 320.

15. The non-transitory computer readable storage medium of claim 14 wherein:
each local representation is a local Bloom filter that identifies each element of the dataset that is stored in local memory of the GPU; and
wherein to generate, based on local representations generated by other GPUs in the GPU cluster, a global representation of the dataset the one or more processing devices are further configured to aggregate each local Bloom filter to form a global Bloom filter, or
further storing instructions which, when executed, cause a processing device to:
prepare a domain specific representation of the dataset that is stored by GPUs in the domain, wherein the processing device is further configured to:
shuffle the local representation of each GPU in the domain;
generate multiple portions of a domain specific representation that are based on the local representations; and
reduce each portion of the domain specific representation, and/or
wherein the one or more processing devices are further configured to broadcast the domain specific representation to one or more GPUs in another domain in the GPU cluster, and/or
wherein to broadcast the domain specific representation to GPUs in a second domain, the one or more processing devices are further configured to:
transfer, from a first GPU in the first domain to one or more GPUs in the second domain, a first portion of the domain specific representation; and
transfer, from a second GPU in the first domain to one or more GPUs in the second domain, a second portion of the domain specific representation, wherein the transfers occur at least partially in parallel, or
wherein to broadcast the domain specific representation to GPUs in a second domain, the one or more processing devices are further configured to:
perform, at least partially in parallel, one or more multicast operations among GPUs distinct domains; and
reduce one or more multicast results.
